# EUROPEAN PATENT SPECIFICATION

(11) **EP 2 814 265 B1**
(45) Date of publication and mention of the grant of the patent: **27.09.2017**
(21) Application number: 14172365.0
(22) Date of filing: 13.06.2014
(51) Int. Cl.: H04R 25/00

(54) **Method and apparatus for advertisement supported hearing assistance device**
Verfahren und Vorrichtung für werbeunterstützte Hörhilfevorrichtung
Procédé et appareil pour dispositif d'assistance auditive soutenu par une publicité

(30) Priority: 14.06.2013 US 201313918535
(43) Date of publication of application: 17.12.2014
(73) Proprietor: Starkey Laboratories, Inc., Eden Prairie, MN 55344 (US)
(72) Inventor: Schmitz, Michael, Golden Valley, MN Minnesota 55426 (US); Sacha, Michael Karl, Chanhassen, MN Minnesota 55317 (US)
(74) Representative: Bird & Bird LLP

(56) References cited:
- EP-A2- 1 185 138
- US-A- 5 721 783
- US-A1- 2005 020 210
- US-A1- 2013 108 096

## Description

### TECHNICAL FIELD

This document relates generally to hearing assistance systems and more particularly to methods and apparatus for advertisement supported hearing assistance devices.

### BACKGROUND

Modem hearing assistance devices, such as hearing aids, are electronic instruments worn in or around the ear that compensate for hearing losses of hearing-impaired people by specially amplifying sound. Hearing aids typically include transducers and specialized circuitry for processing and enhancing sound, and can be monetarily expensive.

Previous attempts at producing a reduced cost or "economy" hearing aid include reducing the bill of sale by using an older and less expensive integrated circuit platform, having reduced memory capacity, and running a reduced set of signal processing algorithms or a reduced feature set. Such economy hearing aids may achieve the price point required by the user, but the user does not receive a full featured hearing aid. The document US 2005/0020210 A1 discloses a method of operating a hearing aid for a user, the method comprising receiving an advertisement for a product or service using the hearing aid, storing the advertisement in a memory of the hearing aid, and programmably playing the advertisement using a receiver of the hearing aid.

Accordingly, there is a need in the art for improved systems and methods for providing hearing assistance devices at a reduced cost.

### SUMMARY

The invention is defined by independent claims 1 and 10. Preferred embodiments are defined in the dependent claims. Disclosed herein, among other things, are systems and methods for advertisement supported hearing assistance devices. One aspect of the present subject matter includes a method of operating a hearing assistance device for a user. An advertisement for a product or service is received using the hearing assistance device, and the advertisement is programmably played using a receiver of the hearing assistance device. Various embodiments include logging data using the hearing assistance device, determining optimal parameter settings for the hearing assistance device based on the logged data, and playing an advertisement for the user related to the optimal parameter settings.

One aspect of the present subject matter includes a hearing assistance system including a hearing assistance device for a user. The system includes a memory configured to store an advertisement for a product or service, and a receiver configured to play sounds for the user. A processor is configured to programmably play the advertisement using the receiver, according to various embodiments. In various embodiments, playing the advertisement includes coordinating the advertisement with a display on a screen of a cellular telephone.

This Summary is an overview of some of the teachings of the present application and not intended to be an exclusive or exhaustive treatment of the present subject matter. Further details about the present subject matter are found in the detailed description and appended claims. The scope of the present invention is defined by the appended claims.

### BRIEF DESCRIPTION OF THE DRAWINGS

FIG. 1 is a block diagram of a system for an advertisement supported hearing assistance device, according to various embodiments of the present subject matter.
FIG. 2 illustrates an advertisement supported receiver-in-canal (RIC) hearing assistance device, according to various embodiments of the present subject matter.
FIG. 3 illustrates a block diagram of a wireless advertisement supported hearing assistance system, according to various embodiments of the present subject matter.
FIG. 4 illustrates a system including an advertisement supported hearing assistance device and a remote device, according to various embodiments of the present subject matter.
FIG. 5 illustrates a flow diagram of a method for operating an advertisement supported hearing assistance device, according to various embodiments of the present subject matter.

### DETAILED DESCRIPTION

The following detailed description of the present subject matter refers to subject matter in the accompanying drawings which show, by way of illustration, specific aspects and embodiments in which the present subject matter may be practiced. These embodiments are described in sufficient detail to enable those skilled in the art to practice the present subject matter. References to "an", "one", or "various" embodiments in this disclosure are not necessarily to the same embodiment, and such references contemplate more than one embodiment. The following detailed description is demonstrative and not to be taken in a limiting sense. The scope of the present subject matter is defined by the appended claims.

The present detailed description will discuss hearing assistance devices using the example of hearing aids. Hearing aids are only one type of hearing assistance device. Other hearing assistance devices include, but are not limited to, those in this document. It is understood that their use in the description is intended to demonstrate the present subject matter, but not in a limited or exclusive or exhaustive sense.

Hearing aids typically include transducers and specialized circuitry for processing and enhancing sound, and can be monetarily expensive. Previous attempts at producing a reduced cost or "economy" hearing aid include reducing the bill of sale by using an older and less expensive integrated circuit platform, having reduced memory capacity, and running a reduced set of signal processing algorithms or a reduced feature set. Such economy hearing aids may achieve the price point required by the user, but the user does not receive a full featured hearing aid.

Disclosed herein, among other things, are systems and methods for advertisement supported hearing assistance devices. One aspect of the present subject matter includes a method of operating a hearing assistance device for a user. An advertisement for a product or service is received using the hearing assistance device, and the advertisement is programmably played using a receiver of the hearing assistance device. Various embodiments include logging data using the hearing assistance device, determining optimal parameter settings for the hearing assistance device based on the logged data, and playing an advertisement for the user related to the optimal parameter settings. In various embodiments, playing the advertisement includes coordinating the advertisement with a display on a screen of a cellular telephone. The advertisement is location-based, using the user's determined location to update and play the advertisement in an embodiment.

The present subject matter includes a method for delivering audible advertisements to a hearing aid user. One potential benefit of the present subject matter includes that, in exchange to listening to the advertisements, the hearing aid user is able to purchase the hearing aid at a reduced cost and/or receive additional hearing aid features at no additional cost. Thus, the present subject matter makes it possible to further lower the cost to the customer of existing economy style hearing aids. In addition, existing customers may be able to obtain additional hearing aid features without incurring additional monetary cost.

Various embodiments of the present subject matter replace some of the existing hearing aid audio indicators, such as the startup tone that is played when a new battery is inserted, with audible product or service advertisements. These advertisements could be for hearing aid manufacturer products or services, audiologist services, or products and services from non-hearing aid related companies, in various embodiments. According to various embodiments, the hearing aid is programmed to automatically play an advertisement periodically, or play an advertisement when a particular event occurs. For example, the hearing aid detects when it is initially placed in the user's ear and subsequently plays an audible pre-recorded advertisement such as "Shop your nearest car dealer for a Buick today!" or "Visit starkey.com to see the latest in product offerings." By agreeing to periodically listen to advertisements played by the hearing aid, the customer could become eligible for a reduced priced hearing aid, in various embodiments.

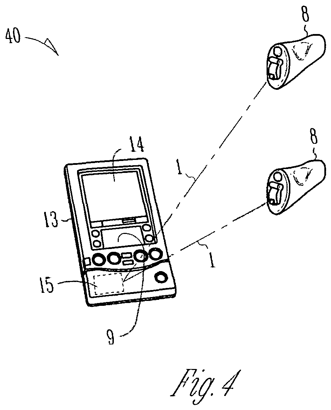

According to various embodiments, multiple new advertisements could be programmed into the hearing aid memory each time the user visits the audiologist. This would ensure that advertisements remain relevant and do not become stale or repetitive. In one embodiment, wireless hearing aids periodically receive updated ads from wireless transmitters, such as wireless hearing aid programmers, smartphones, or other internet enabled devices as shown in FIG. 4, for example. If the hearing aid or advertisement delivery system is aware of the user's position (such as by a global positioning system or GPS), then location-relevant ads could be delivered, such as coupons for a nearby restaurant. In various embodiments, smartphone compatible hearing aids could also coordinate audible ads played to the user through the hearing aid with the visual display of ads on a smartphone screen. This extra information displayed on the smartphone would provide a mechanism for the user to learn more about the advertisement and direct them to the advertiser's website, for example.

Advertisements can be delivered to the hearing aid in a variety of ways. In various embodiments, advertisements are delivered to the hearing aid during manufacture of the hearing aid, while the user is at the audiologist office for a fitting or checkup, over a wired interface and/or over a wireless interface. According to various embodiments, advertisements can be stored in hearing aid memory. Several different advertisements can be stored simultaneously, in an embodiment. The selection of an advertisement to play can be pre-determined or random, in various embodiments. In an embodiment, the playback of an advertisement in hearing aid memory does not require the involvement of non-hearing aid hardware, making it less likely the user can prevent the hearing aid from playing an advertisement.

According to various embodiments, advertisements can be streamed to the hearing aid. Streaming an advertisement over a wireless connection does not require free memory space in the hearing aid to store the full advertisement, in an embodiment. The content of streamed advertisements is updated based on: user location, time of day, and user activity according to the invention. According to various embodiments, the playback of advertisements can occur at random and/or in sync with an event such as: power up of the hearing aid, insertion of the hearing aid, change of hearing aid memory, after a fixed or programmable time delay, upon connection with a wireless device, when the user enters a specific physical location (if in communication with wireless transmitter with GPS and/or an internet connection, such as a smartphone), and/or upon the detection by the hearing aid of specific sounds, spoken phrases, or key words.

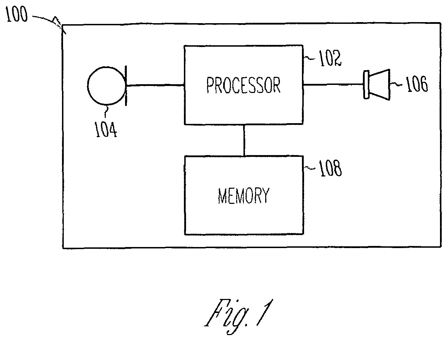

FIG. 1 is a block diagram of a system for an advertisement supported hearing assistance device 100, according to various embodiments of the present subject matter. The system includes a memory 108 configured to store an advertisement for a product or service, and a receiver 106 configured to play sounds for the user. A processor 102 is configured to programmably play the advertisement using the receiver, according to various embodiments. In various embodiments, the system includes a microphone 104 to detect acoustic signals. According to various embodiments, in exchange for agreeing to listen to an agreed quantity of the advertisements, the hearing aid user is able to purchase the hearing aid(s) at a reduced cost.

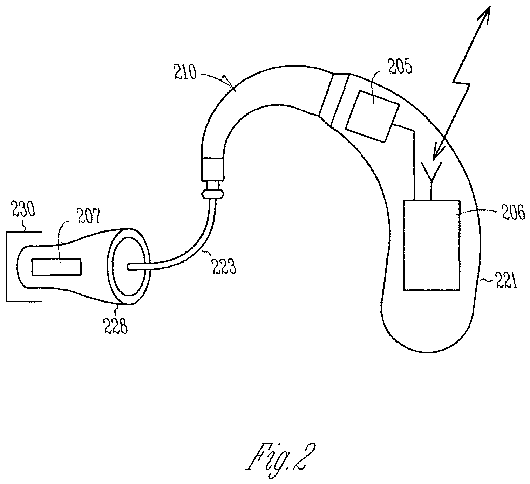

FIG. 2 illustrates an advertisement supported receiver-in-canal (RIC) hearing assistance device, according to various embodiments of the present subject matter. FIG. 2 demonstrates one embodiment with a RIC design, and it is understood that other types of hearing assistance devices may be employed without departing from the scope of the present subject matter. The illustrated hearing assistance device includes wireless communication capability. In various embodiments, the hearing assistance device 210 includes a first housing 221, a second housing 228 and a cable assembly 223 that includes conductors, which connect electrical components such as hearing assistance electronics 205 enclosed in the first housing 221 to electrical components such as speaker (also known as a "receiver" as used in hearing aid parlance) 207 enclosed within second housing 228. In one embodiment, first housing 221 includes signal processing electronics in communication with the wireless transceiver 206 to perform various signal processing. In various embodiments, at least one of the first housing 221 and the second housing 228 includes at least one microphone to capture the acoustic waves that travel towards a user's ears. In the illustrated embodiment, the first housing 221 is adapted to be worn on or behind the ear of a user and the second housing 228 is adapted to be positioned in an ear canal 230 of the user. Various embodiments of the hearing assistance electronics 205 include a processor and a memory, where the memory is configured to store advertisements and the processor is configured to programmably play the advertisements using the receiver 207.

In various embodiments, such as in behind-the-ear devices, hearing assistance electronics 205 is in communications with a receiver in first housing 221. In such embodiments, a hollow sound tube is used to transmit sound from the receiver in the behind-the-ear or over-the-ear device to an earpiece 228 in the ear. Thus, in the BTE application, BTE housing 221 is connected to a sound tube 223 to provide sound from the receiver to a standard or custom earpiece 228. In such BTE designs, no receiver is found in the earpiece 228. In various embodiments, the first housing 221 is a housing adapted to be worn on the ear of a user, such as, an on-the-ear (OTE) housing or a behind-the-ear (BTE) housing. In various embodiments, the second housing 228 includes an earmold. In various embodiments, the second housing 228 includes an in-the-ear (ITE) housing. In various embodiments, the second housing 228 includes an in-the-canal (ITC) housing. In various embodiments, the second housing 228 includes a completely-in-the-canal (CIC) housing. In various embodiments the second housing 228 includes an earbud. In various embodiments, the receiver 207 is placed in the ear canal of the wearer using a small nonocclusive housing. Other earpieces are possible without departing from the scope of the present subject matter.

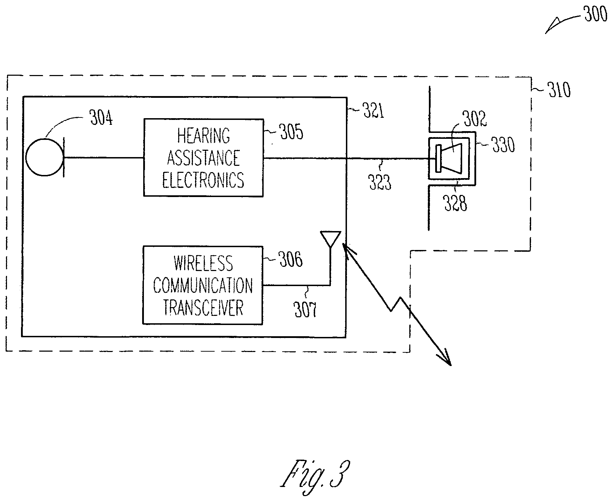

FIG. 3 illustrates a block diagram of a wireless advertisement supported hearing assistance system, according to various embodiments of the present subject matter. In various embodiments, the hearing assistance device 310 includes a first housing 321, an acoustic receiver 302, positioned in or about the ear canal 330 of a wearer and conductors 323 coupling the receiver 302 to the first housing 321 and the electronics enclosed therein. The electronics enclosed in the first housing 321 includes a microphone 304, hearing assistance electronics 305, a wireless communication transceiver 306 and an antenna 307. In various embodiments, the hearing assistance electronics 305 includes at least one processor and memory components. The memory components store advertisements for products or services, in various embodiments. The advertisements can be programmed into the memory during manufacture of the device, during fitting or follow up appointments with an audiologist, or can be stored or updated via a remote device (such as in FIG. 4) using a wired connection or using a wireless connection to the wireless transceiver 306. The memory components also store program instructions for the at least one processor. The program instructions include functions allowing the processor and other components to process audio received by the microphone 304 and transmit processed audio signals to the receiver 302. The receiver emits the processed audio signal as sound in the user's ear canal. In various embodiments, the hearing assistance electronics includes functionality to amplify, filter, limit, condition or a combination thereof, the sounds received using the microphone 304. In the illustrated embodiment of FIG. 3, the wireless communications transceiver 306 is connected to the hearing assistance electronics 305 and the conductors 323 connect the hearing assistance electronics 305 and the speaker 302.

FIG. 4 illustrates a system 40 including an advertisement supported hearing assistance device and a remote device, according to various embodiments of the present subject matter. A remote device 13 has internal electronics 15 which are native to the remote device 13, in an embodiment. Communications 1 between remote device 13 and hearing aids 8 may be conducted over wired, wireless or combinations of wired and wireless connections. Remote device 13 is shown as a cellular phone, however, it is understood that remote device 13 may be any variety of computer, including, but not limited to, a cellular telephone, such as a smartphone or iPhone, a global positioning system (GPS) device, a personal digital assistant (PDA), an iPod, a hearing aid programmer, or other type of mobile device or computer. It is further understood that hearing aids 8 are shown as completely-in-the-canal (CIC) hearing aids, but that any type of devices, including but not limited to, in-the-ear (ITE), behind-the-ear (BTE), receiver-in-the-canal (RIC), cochlear implants, headphones, and hearing assistance devices generally as may be developed in the future may be used without departing from the scope of the present subject matter. It is further understood that a single hearing aid may be used and thus, the present subject matter is not limited to dual hearing aid applications. Remote device 13 is shown as having a screen 14. The screen 14 is demonstrated as a liquid crystal display (LCD), but it is understood that any type of screen may be used without departing from the scope of the present subject matter. Remote device 13 also has various input devices 9, including keys and/or a touch screen; however, it is understood that any input device, including, but not limited to, a joystick, a trackball, or other input device may be used without departing from the present subject matter. An input interface facilitates input from users of the system. Inputs include, but are not limited to, pointer device, touch, voice, gesture, and keyboard inputs. In various embodiments, the remote device 13 delivers new or updated advertisements for products or services to the hearing aids 8 using communications 1. The hearing aids 8 play the advertisement in coordination with a related display on screen 14, in various embodiments.

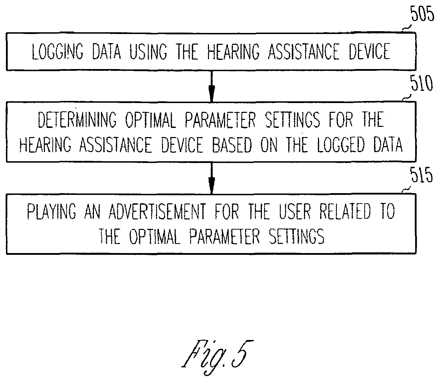

FIG. 5 illustrates a flow diagram of a method for operating an advertisement supported hearing assistance device, according to various embodiments of the present subject matter. Embodiments of the present subject matter include a method of operating a hearing assistance device for a user, including receiving an advertisement for a product or service using the hearing assistance device, and programmably playing the advertisement using a receiver of the hearing assistance device. According to various embodiments, the present subject matter provides for logging data using the hearing assistance device, at 505. At 510, optimal parameter settings are determined for the hearing assistance device based on the logged data. An advertisement is played for the user related to the optimal parameter settings, at 515. Various embodiments of logging data include logging hypothetical data. Some examples of such embodiments are found in, but not limited to, U.S. Patent No. 7,986,790, entitled SYSTEM FOR EVALUATING HEARING ASSISTANCE DEVICE SETTINGS USING DETECTED SOUND ENVIRONMENT, issued July 26, 2011, and U.S. Patent Application Serial No. 13/189,990, filed July 25, 2011. Based on the data logging result, the system can make a recommendation (or advertisement) to the user of a feature of the device that is not yet enabled, but could benefit the user, in various embodiments.

Various embodiments of the present subject matter support wireless communications with a hearing assistance device. In various embodiments the wireless communications can include standard or nonstandard communications. Some examples of standard wireless communications include link protocols including, but not limited to, Bluetooth™, IEEE 802.11 (wireless LANs), 802.15 (WPANs), 802.16 (WiMAX), cellular protocols including, but not limited to CDMA and GSM, ZigBee, and ultra-wideband (UWB) technologies. Such protocols support radio frequency communications and some support infrared communications. Although the present system is demonstrated as a radio system, it is possible that other forms of wireless communications can be used such as ultrasonic, optical, infrared, and others. It is understood that the standards which can be used include past and present standards. It is also contemplated that future versions of these standards and new future standards may be employed without departing from the scope of the present subject matter.

The wireless communications support a connection from other devices. Such connections include, but are not limited to, one or more mono or stereo connections or digital connections having link protocols including, but not limited to 802.3 (Ethernet), 802.4, 802.5, USB, SPI, PCM, ATM, Fibre-channel, Firewire or 1394, InfiniBand, or a native streaming interface. In various embodiments, such connections include all past and present link protocols. It is also contemplated that future versions of these protocols and new future standards may be employed without departing from the scope of the present subject matter.

It is understood that variations in communications protocols, antenna configurations, and combinations of components may be employed without departing from the scope of the present subject matter. Hearing assistance devices typically include an enclosure or housing, a microphone, hearing assistance device electronics including processing electronics, and a speaker or receiver. It is understood that in various embodiments the microphone is optional. It is understood that in various embodiments the receiver is optional. Antenna configurations may vary and may be included within an enclosure for the electronics or be external to an enclosure for the electronics. Thus, the examples set forth herein are intended to be demonstrative and not a limiting or exhaustive depiction of variations.

It is further understood that any hearing assistance device may be used without departing from the scope and the devices depicted in the figures are intended to demonstrate the subject matter, but not in a limited, exhaustive, or exclusive sense. It is also understood that the present subject matter can be used with a device designed for use in the right ear or the left ear or both ears of the user.

It is understood that the hearing aids referenced in this patent application include a processor. The processor may be a digital signal processor (DSP), microprocessor, microcontroller, other digital logic, or combinations thereof. The processing of signals referenced in this application can be performed using the processor. Processing may be done in the digital domain, the analog domain, or combinations thereof. Processing may be done using subband processing techniques. Processing may be done with frequency domain or time domain approaches. Some processing may involve both frequency and time domain aspects. For brevity, in some examples drawings may omit certain blocks that perform frequency synthesis, frequency analysis, analog-to-digital conversion, digital-to-analog conversion, amplification, audio decoding, and certain types of filtering and processing. In various embodiments the processor is adapted to perform instructions stored in memory which may or may not be explicitly shown. Various types of memory may be used, including volatile and nonvolatile forms of memory. In various embodiments, instructions are performed by the processor to perform a number of signal processing tasks. In such embodiments, analog components are in communication with the processor to perform signal tasks, such as microphone reception, or receiver sound embodiments (i.e., in applications where such transducers are used). In various embodiments, different realizations of the block diagrams, circuits, and processes set forth herein may occur without departing from the scope of the present subject matter.

The present subject matter is demonstrated for hearing assistance devices, including hearing aids, including but not limited to, behind-the-ear (BTE), in-the-ear (ITE), in-the-canal (ITC), receiver-in-canal (RIC), or completely-in-the-canal (CIC) type hearing aids. It is understood that behind-the-ear type hearing aids may include devices that reside substantially behind the ear or over the ear. Such devices may include hearing aids with receivers associated with the electronics portion of the behind-the-ear device, or hearing aids of the type having receivers in the ear canal of the user, including but not limited to receiver-in-canal (RIC) or receiver-in-the-ear (RITE) designs. The present subject matter can also be used in hearing assistance devices generally, such as cochlear implant type hearing devices and such as deep insertion devices having a transducer, such as a receiver or microphone, whether custom fitted, standard, open fitted or occlusive fitted. It is understood that other hearing assistance devices not expressly stated herein may be used in conjunction with the present subject matter.

This application is intended to cover adaptations or variations of the present subject matter. It is to be understood that the above description is intended to be illustrative, and not restrictive. The scope of the present subject matter should be determined with reference to the appended claims.

## Claims

1. A method of operating a hearing aid (8, 100, 210, 310) for a user, the method comprising:
receiving an advertisement for a product or service using the hearing aid (8, 100, 210, 310);
storing the advertisement in a memory (108) of the hearing aid (8, 100, 210, 310); and
programmably playing the advertisement using a receiver (106, 207, 302) of the hearing aid (8, 100, 210, 310) upon detection by the hearing aid (8, 100, 210, 310) of specific sounds, spoken phrases or key words, wherein content of the advertisement is updated based on user location, time of day and user activity.

2. The method of claim 1, comprising:
logging data using the hearing aid (8, 100, 210, 310);
determining optimal parameter settings for the hearing aid (8, 100, 210, 310) based on the logged data; and
playing an advertisement for the user related to the optimal parameter settings.

3. The method of claim 1 or claim 2, wherein the advertisement is received wirelessly from a streaming device (13) which includes a cellular telephone.

4. The method of any of the preceding claims, wherein playing the advertisement includes playing the advertisement upon satisfaction of a programmable condition.

5. The method of claim 4, wherein the programmable condition includes detection of placement of the hearing aid (8, 100, 210, 310) in the user's ear.

6. The method of claim 4, wherein the programmable condition includes the user's location.

7. The method of claim 6, comprising receiving and storing a location-relevant advertisement based on the user's location.

8. The method of claim 6, wherein playing the advertisement includes playing a location-relevant advertisement based on the user's location.

9. The method of any of the preceding claims, wherein playing the advertisement includes coordinating the advertisement with a display on a screen (14) of a cellular telephone (13).

10. A hearing assistance system including a hearing aid (8, 100, 210, 310) for a user, the system comprising:
a memory (108) configured to store an advertisement for a product or service;
a receiver (106, 207, 302) configured to play sounds for the user; and
a processor (102) configured to programmably play the advertisement using the receiver (106, 207, 302) upon detection by the hearing aid (8, 100, 210, 310) of specific sounds, spoken phrases or key words, wherein content of the advertisement is updated based on user location, time of day and user activity.

11. The system of claim 10, wherein the memory (108) is configured to log data during operation of the hearing aid (8, 100, 210, 310), the processor (102) is configured to determine optimal parameter settings for the hearing aid (8, 100, 210, 310) based on the logged data, and to play an advertisement for the user related to the optimal parameter settings.

12. The system of claim 10 or claim 11, wherein the processor (102) is configured to randomly play the advertisement using the receiver (106, 207, 302).

13. The system of claim 10 or claim 11, wherein the processor (102) is configured to play the advertisement after a programmable time delay.

14. The system of claim 10 or claim 11, wherein the processor (102) is configured to play the advertisement when the user enters a specific physical location.

15. The system of claim 10 or claim 11, wherein the processor (102) is configured to play the advertisement upon connection of the hearing aid (8, 100, 210, 310) with a remote wireless device (13).

## Patentansprüche

1. Verfahren zum Betreiben einer Hörhilfe (8**,** 100, 210, 310) für einen Benutzer, wobei das Verfahren aufweist:
Empfangen einer Werbung für ein Produkt oder eine Dienstleistung unter Verwendung der Hörhilfe (8, 100, 210, 310);
Speichern der Werbung in einem Speicher (108) der Hörhilfe (8, 100, 210, 310); und
programmierbares Wiedergeben der Werbung unter Verwendung eines Lautsprechers (106, 207, 302) der Hörhilfe (8, 100, 210, 310) bei Detektion von spezifischen Klängen, gesprochenen Ausdrücken oder Schlüsselwörtern durch die Hörhilfe (8, 100, 210, 310), wobei ein Inhalt der Werbung auf Grundlage eines Orts des Benutzers, einer Tageszeit und einer Benutzeraktivität aktualisiert wird.

2. Verfahren nach Anspruch 1, das aufweist:
Protokollieren von Daten unter Verwendung der Hörhilfe (8, 100, 210, 310);
Bestimmen von optimalen Parametereinstellungen für die Hörhilfe (8, 100, 210, 310) auf Grundlage der protokollierten Daten; und
Wiedergeben einer Werbung für den Benutzer, die in Zusammenhang mit den optimalen Parametereinstellungen steht.

3. Verfahren nach Anspruch 1 oder Anspruch 2, bei dem die Werbung drahtlos von einer Streaming-Vorrichtung (13) empfangen wird, die ein Mobiltelefon aufweist.

4. Verfahren nach einem der vorhergehenden Ansprüche, bei dem ein Wiedergeben der Werbung aufweist, die Werbung bei Erfüllung einer programmierbaren Bedingung wiederzugeben.

5. Verfahren nach Anspruch 4, bei dem die programmierbare Bedingung eine Detektion einer Anordnung der Hörhilfe (8, 100, 210, 310) in dem Ohr des Benutzers aufweist.

6. Verfahren nach Anspruch 4, bei dem die programmierbare Bedingung den Ort des Benutzers enthält.

7. Verfahren nach Anspruch 6, das aufweist, eine ortsrelevante Werbung auf Grundlage des Orts des Benutzers zu empfangen und zu speichern.

8. Verfahren nach Anspruch 6, bei dem ein Wiedergeben der Werbung ein Wiedergeben einer ortsrelevanten Werbung auf Grundlage des Orts des Benutzers aufweist.

9. Verfahren nach einem der vorhergehenden Ansprüche, bei dem ein Wiedergeben der Werbung ein Koordinieren der Werbung mit einer Anzeige auf einem Bildschirm (14) eines Mobiltelefons (13) aufweist.

10. Hörhilfesystem, das eine Hörhilfe (8, 100, 210, 310) für einen Benutzer aufweist, wobei das System aufweist:
einen Speicher (108), der ausgestaltet ist, um eine Werbung für ein Produkt oder eine Dienstleistung zu speichern;
einen Lautsprecher (106, 207, 302), der ausgestaltet ist, um Klänge für den Benutzer wiederzugeben; und
einen Prozessor (102), der ausgestaltet ist, um die Werbung unter Verwendung des Lautsprechers (106, 207, 302) bei Detektion von spezifischen Klängen, gesprochenen Ausdrücken oder Schlüsselwörtern durch die Hörhilfe (8, 100, 210, 310) programmierbar wiederzugeben, wobei ein Inhalt der Werbung auf Grundlage eines Orts des Benutzers, einer Tageszeit und einer Benutzeraktivität aktualisiert wird.

11. System nach Anspruch 10, bei dem der Speicher (108) ausgestaltet ist, um Daten während des Betriebs der Hörhilfe (8, 100, 210, 310) zu protokollieren, wobei der Prozessor (102) ausgestaltet ist, um optimale Parametereinstellungen für die Hörhilfe (8, 100, 210, 310) auf Grundlage der protokollierten Daten zu bestimmen und um eine Werbung für den Benutzer wiederzugeben, die in Zusammenhang mit den optimalen Parametereinstellungen steht.

12. System nach Anspruch 10 oder Anspruch 11, bei dem der Prozessor (102) ausgestaltet ist, um die Werbung unter Verwendung des Lautsprechers (106, 207, 302) zufallsgesteuert wiederzugeben.

13. System nach Anspruch 10 oder Anspruch 11, bei dem der Prozessor (102) ausgestaltet ist, um die Werbung nach einer programmierbaren Zeitverzögerung wiederzugeben.

14. System nach Anspruch 10 oder Anspruch 11, bei dem der Prozessor (102) ausgestaltet ist, um die Werbung wiederzugeben, wenn der Benutzer in einen spezifischen physischen Ort eintritt.

15. System nach Anspruch 10 oder Anspruch 11, bei dem der Prozessor (102) ausgestaltet ist, um die Werbung bei Verbindung der Hörhilfe (8, 100, 210, 310) mit einer entfernten drahtlosen Vorrichtung (13) wiederzugeben.

## Revendications

1. Procédé de fonctionnement d'une aide auditive (8, 100, 210, 310) pour un utilisateur, le procédé consistant à :
recevoir un message publicitaire pour un produit ou un service au moyen de l'aide auditive (8, 100, 210, 310) ;
mémoriser le message publicitaire dans une mémoire (108) de l'aide auditive (8, 100, 210, 310) ; et
lire par programme le message publicitaire à l'aide d'un récepteur (106, 207, 302) de l'aide auditive (8, 100, 210, 310) après la détection par l'aide auditive (8, 100, 210, 310) de sons spécifiques, de phrases parlées ou de mots clés, le contenu du message publicitaire étant mis à jour en fonction de l'emplacement de l'utilisateur, du moment de la journée et de l'activité de l'utilisateur.

2. Procédé selon la revendication 1, consistant à :
enregistrer les données à l'aide de l'aide auditive (8, 100, 210, 310) ; déterminer des réglages optimaux de paramètre pour l'aide auditive (8, 100, 210, 310) en fonction des données enregistrées ; et
lire le message publicitaire pour l'utilisateur associé aux réglages optimaux de paramètre.

3. Procédé selon la revendication 1 ou la revendication 2, le message publicitaire étant reçu sans fil en provenance d'un dispositif (13) de diffusion en continu qui comprend un téléphone cellulaire.

4. Procédé selon l'une quelconque des revendications précédentes, la lecture du message publicitaire consistant à lire la publicité en fonction de la satisfaction d'une condition programmable.

5. Procédé selon la revendication 4, la condition programmable
consistant à détecter l'emplacement de l'aide auditive (8, 100,
210, 310) dans l'oreille de l'utilisateur.

6. Procédé selon la revendication 4, la condition programmable comprenant l'emplacement de l'utilisateur.

7. Procédé selon la revendication 6, consistant à recevoir et à mémoriser un message publicitaire pertinent pour l'emplacement en fonction de l'emplacement de l'utilisateur.

8. Procédé selon la revendication 6, la lecture du message publicitaire consistant à lire un message publicitaire pertinent pour l'emplacement en fonction de l'emplacement de l'utilisateur.

9. Procédé selon l'une quelconque des revendications précédentes, la lecture du message publicitaire consistant à coordonner le message publicitaire avec un affichage sur un écran (14) d'un téléphone cellulaire (13).

10. Système d'assistance auditive comprenant une aide auditive (8, 100, 210, 310) pour un utilisateur, le système comprenant :
une mémoire (108) conçue pour mémoriser un message publicitaire pour un produit ou un service ;
un récepteur (106, 207, 302) conçu pour lire les sons pour l'utilisateur ; et
un processeur (102) conçu pour lire par programme le message publicitaire à l'aide d'un récepteur (106, 207, 302) après la détection
par l'aide auditive (8, 100, 210, 310) de sons spécifiques, de phrases parlées ou de mots clés, le contenu du message publicitaire étant mis à jour en fonction de l'emplacement de l'utilisateur, du moment de la journée et de l'activité de l'utilisateur.

11. Système selon la revendication 10, la mémoire (108) étant conçue pour enregistrer les données pendant le fonctionnement de l'aide auditive (8, 100, 210, 310), le processeur (102) étant conçu pour déterminer les réglages optimaux de paramètre pour l'aide auditive (8, 100, 210, 310) en fonction des données enregistrées et pour lire un message publicitaire associé aux réglages optimaux de paramètre.

12. Système selon la revendication 10 ou la revendication 11, le processeur (102) étant conçu pour lire aléatoirement le message publicitaire à l'aide du récepteur (106, 207, 302).

13. Système selon la revendication 10 ou la revendication 11, le processeur (102) étant conçu pour lire le message publicitaire après un temps de retard programmable.

14. Système selon la revendication 10 ou la revendication 11, le processeur (102) étant conçu pour lire le message publicitaire lorsque l'utilisateur pénètre dans un emplacement physique spécifique.

15. Système selon la revendication 10 ou la revendication 11, le processeur (102) étant conçu pour lire le message publicitaire après la connexion de l'aide auditive (8, 100, 210, 310) à un dispositif (13) sans fil à distance.
